# Europäisches Patentamt
# European Patent Office
# Office européen des brevets

(19)

(11) Publication number: **0 237 132**
**B1**

(12) **EUROPEAN PATENT SPECIFICATION**

(45) Date of publication of the patent specification:
**06.06.90**

(21) Application number: **87200451.0**

(22) Date of filing: **10.03.87**

(51) Int. Cl.⁵: **C08F 20/00**

(54) Process for the preparation of water-soluble saccharide polymers.

(30) Priority: **13.03.86 GB 8606249**

(43) Date of publication of application:
**16.09.87 Bulletin 87/38**

(45) Publication of the grant of the patent:
**06.06.90 Bulletin 90/23**

(84) Designated Contracting States:
**BE CH DE FR GB IT LI NL SE**

(56) References cited:
**GB-A- 1 099 372**
**GB-A- 2 159 524**

(73) Proprietor: **SHELL INTERNATIONALE RESEARCH MAATSCHAPPIJ B.V., Carel van Bylandtlaan 30, NL-2596 HR Den Haag(NL)**

(72) Inventor: **Graafland, Teunis, Badhuisweg 3, NL-1031 CM Amsterdam(NL)**

(74) Representative: **Aalbers, Onno et al, P.O. Box 302, NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a process for the preparation of water-soluble saccharide polymers via a free-radical initiated polymerization of a vinyl group-containing saccharide monomer. These polymers, which will be referred to hereinafter as water-soluble vinyl saccharide polymers, are useful as polymeric thickeners for use in Enhanced Oil Recovery (EOR) or as water treating agents.

In "Entwicklung neuer Polymertypen zur Tertiärförderung von Erdöl", - Forschungsbericht 165-2 (1982) of the Deutsche Gesellschaft für Mineralölwissenschaft und Kohlenchemie - a survey is given on the preparation and performance of water-soluble vinyl saccharide polymers, including those which would result in aqueous solutions having higher viscosities than obtained sofar with such polymers. For both options which are available for the preparation of such polymers, i.e. firstly polymerization of a vinyl ester of a monosaccharide, of which the pending hydroxyl groups have been protected, in an organic solvent medium and in the presence of a free-radical initiator, followed by treatment with acid to liberate the hydroxyl groups to render the polymer water-soluble and secondly, polymerization in water of a water-soluble vinyl ester of a monosaccharide in the presence of hydrogen peroxide, potassium persulphate or ammonium persulphate as free-radical initiator, it is concluded that it was not possible to produce water-soluble polymers which as a 1 %w solution in water had a viscosity higher than 2.0 mPa.s at 25°C.

Surprisingly, it has now been found possible to prepare water-soluble vinyl saccharide polymers, of which the aqueous solutions have considerably higher viscosities than aqueous solutions based on the water-soluble vinyl saccharide polymers prepared hitherto , if certain initiators are used at certain monovinyl saccharide monomer concentrations. The term monovinyl saccharide monomer refers to mono- or di-saccharide compounds containing one polymerizable vinyl group.

Accordingly, the invention provides a process for the preparation of water-soluble vinyl saccharide polymers by polymerization in water of at least one water soluble monovinyl saccharide monomer at a temperature in the range of from 10°C to 90°C, wherein the polymerization is carried out in the presence of a non-azo type free-radical initiator having a solubility in water at 20°C of not more than 2500 $\mu$ mol/kg and the concentration of water-soluble monovinyl saccharide monomer in water is not higher than 150 kg/m$^3$ water.

Particularly preferred non-azo type free-radical initiators are those having a solubility in water at 20°C of not more than 1500 $\mu$ mol/kg.

Non-azo type free-radical initiators, which may be employed in the process of the present invention include diacyl peroxides, peroxydicarbonates and peroxyesters. Preferred diacyl peroxide free-radical initiators are dibenzoyl peroxide, bis(2-methylbenzoyl) peroxide, di(p-chlorobenzoyl) peroxide, di(2,4-dichlorobenzoyl) peroxide and dodecanoyl peroxide. Preferred peroxydicarbonate free-radical initiators are dicyclohexyl peroxydicarbonate, bis(tert-butylcyclohexyl) peroxydicarbonate and dimyristyl peroxydicarbonate and preferred peroxyester free-radical initiators are tert-butyl peroxypivalate, tert-butyl peroxybenzoate and tert-butyl peroxy(2-ethyl)hexanoate.

The solubility in water at 20°C of the free-radical initiators as herein before defined has been determined by means of an iodometric titration method as described hereinafter.

As mentioned hereinbefore monomers which may conveniently be used in the preparation of water-soluble vinyl saccharide polymers are water-soluble mono- or di-saccharide compounds containing one polymerizable vinyl group This polymerizable vinyl group may be a vinyloxy or a vinylcarbonyloxy group. Suitable such vinyloxy group-containing monosaccharide compounds include: 3-0-vinyl-D-glucose, 6-vinyl-D-galactose and 1-0-vinyl-L-sorbose.

The group of polymerizable monosaccharide compounds bearing a vinylcarbonyloxy group include compounds such as 3-0-acryloyl-D-glucose, 3-0-methacryoyl-D-glucose, 6-0-acryloyl-D-galactose, 6-0-methacryloyl-D-galactose, 1-0-acryloyl-L-sorbose, 1-0-methacryloyl-L-sorbose, 1-0-acryloyl-mannose and 1-0-methacryloyl-mannose.

Methods for the preparation of the polymerizable water-soluble vinyloxy group-containing monosaccharides have been disclosed by e.g. Reppe et al in Annalen, 1956, 601, 81 and Watanabe and Colon in J. Amer. Chem. Soc. 1957, 79, 2828. A method for the preparation of the polymerizable water soluble vinylcarbonyloxy group containing monosaccharides has been disclosed by Black et al, Makromol. Chem. 117 (1968), 210.

Although the preparation of these water-soluble vinyl saccharide polymers can be carried out with both the vinyloxy group and vinylcarbonyloxy group-containing saccharide monomers, the preferred monovinyl saccharide monomer is a vinylcarbonyloxy group-containing saccharide monomer, because it is known that it is more difficult to prepare high molecular weight polymers employing a vinyloxy group-containing saccharide monomer. Within the group of water-soluble vinylcarbonyloxy group-containing saccharide monomers there is a preference for using a monomethacryloyl group-containing saccharide monomer as it is thought that they will result in water-soluble polymers which generally are hydrolytically more stable than the corresponding acrylic acid based products. Particularly preferred is 3-0-methacryloyl-D-glucose.

The above monomers all have in common that their polymerization will result in a water-soluble vinyl saccharide polymer having a non-ionic character. However, the present invention is not restricted to the preparation of the non-ionic water-soluble saccharide polymers, but can also be affected to provide water-soluble polyvinyl saccharide polymers having an ionic character. This may be effected by carrying out the polymerization of water-soluble e.g. monosaccharide monomer in the presence of at least one water-soluble polymerizable compound bearing an ionic group e.g. a carboxy or sulfo ($HO.SO_2$-) group. Suitably such ionic water-soluble monomers include acrylic acid, methacrylic acid, maleic acid, itaconic acid (also referred to as "methylene succinic acid") and 3-0-methacryloyl-D-gluconic acid. Methacrylic acid is an especially preferred $\alpha$, $\beta$-olefinically unsaturated monocarboxylic acid. Preferably in the process of the present invention at least one water-soluble $\alpha$, $\beta$-olefinically unsaturated mono- or di-carboxylic acid is copolymerized. The amount of water-soluble monomer of the ionic type which may be copolymerized is not critical and may vary over a wide range and will to a large extent be governed by the performance requirements of the ultimate polymer.

The preparation of the water-soluble vinyl saccharide polymers can be effected by any of the known polymerization processes such as batchwise polymerization, via a steady state process, via a programmed addition etc. In view of the relatively small scale on which the experiments for the present invention have been carried out, a batchwise polymerization was considered to be very suitable but should not be interpreted to be a limitation of the process according to the present invention. With the batchwise mode of polymerization the aqueous monomer solution and the initiator are introduced into the reactor before commencing the reaction, which reaction is preferably carried out in a nitrogen atmosphere. As it is the intention to produce high molecular weight polymers it can be expected that the viscosity in the reactor towards the end of the reaction will be extremely high, hence the starting concentration of monovinyl saccharide monomer in water, as mentioned hereinbefore, should not exceed 150 $kg/m^3$ and more preferably not exceed 100 $kg/m^3$. Moreover, too high a monomer concentration may result in gel formation.

As the non-azo free-radical initiators, which may conveniently be used in the process of the present invention, have a limited solubility in water, it has been found beneficial to introduce these compounds into the reactor; as a solution in a water-miscible organic solvent e.g. acetone. The amount of free-radical initiator to be used for the process of the invention may vary over wide ranges, but with a process wherein high molecular weight polymers are to be made there should be a maximum to the amount which may be used. Hence, the molar ratio of water-soluble monovinyl saccharide monomer to non-azo type of free-radical initiator is preferably at least 100:1, and more preferably at least 500:1. As the objective of the present invention is to prepare water-soluble vinyl saccharide polymers which will result in aqueous solutions having a high solution viscosity, it is necessary for the molecular weight of said polymer to be as high as possible. Polymers having a high molecular weight are generally prepared by conducting the polymerization at a relatively low temperature. As described hereinbefore the process of the present invention is carried out at a temperature in the range of from 10°C - 90°C. Preferably the process is carried out at a temperature in the range of from 25°C - 75°C.

At the end of the polymerization reaction the ultimate polymer may be isolated from any unreacted monomer etc. by pouring the reactor contents in an excess of e.g. ethanol, whereupon the polymer is precipitated. Upon drying the precipitate, a white water-soluble cake is obtained. In the event of the polymer being a copolymer of at least one water-soluble saccharide monomer and at least one water-soluble carboxy group-bearing monomer, the dried polymer is dissolved in a large excess of water and subsequently the carboxy groups neutralized with an aqueous solution of an alkali metal hydroxide or ammonium hydroxide, which neutralization reaction results, depending on the carboxylic acid content of the water-soluble polymer, in a considerable increase in the viscosity of the solution.

The non-ionic type of water-soluble vinyl saccharide polymers prepared by the process of this invention may conveniently be used as thickeners and aqueous solutions can be obtained therefrom having a high viscosity at low polymer concentration, which viscosity appears to be hardly affected by the salinity of said solution. Hence these polymers are eminently suitable for use as water thickeners in flooding water which is applied in the EOR even under circumstances of relatively high salinity of formation water. Other outlets for these polysaccharide polymers may be found in e.g. the ink and paper industry, while their use in the exploration and production of oil and gas such as in drilling fluids and completion fluids is also envisaged. Although the viscosity of aqueous solutions based on the ionic type of vinyl saccharide polymers may be very much higher compared to that of similar solutions based on comparable non-ionic type of vinyl saccharide polymers - i.e. those prepared under the same polymerization conditions - this can only be realised with salinity free or low salinity solutions. An increase in the salinity of the solution may well result in a considerable decrease in the viscosity of the solution. Hence these ionic type of polymers may advantageously be employed in applications where salinity free or low salinity water is present e.g. for EOR in low salinity reservoirs or for water treatment.

The invention will be further described with reference to the following Examples. In connection with the Examples the following information is given.

a) Definition of Codes

| Code | Chemical name |
|---|---|
| A: | Dimyristyl peroxydicarbonate |
| B: | tert-Butyl peroxypivalate |
| C: | Dicyclohexyl peroxydicarbonate |
| D: | Bis(2-methylbenzoyl) peroxide |
| E: | 4-(tert-butyl)cyclohexyl peroxydicarbonate |
| APS: | ammonium persulphate |
| $H_2O_2$: | hydrogen peroxide |
| MG: | 3-O-methacryloyl-D-glucose |
| MA: | methacrylic acid |
| poly MG/MA: | copolymer of MG and MA. |

The polymers obtained have been characterised by the viscosity at 25°C of the aqueous solutions containing 1.0 %w of polymer unless otherwise mentioned. The viscosity measurements were conducted using a Brookfield viscometer equipped with an UL-adapter and the resulting values expressed as mPa.s.

b) Preparation of 3-0-methacryloyl-D-glucose (MG).

4 g of 1.2:5.6-di-0-isopropylidene-3-0-methacryloyl-D-glucose (DIMG), 25 mg of p-methoxyphenol and 30 ml 0.5 N HCl were introduced into a 100 ml glass reactor equipped with a glass stirrer, a thermometer and a reflux condensor, and subsequently the reactor was placed in an thermostated oil-bath. The reactor contents were heated to 70°C with continuous stirring, and maintained at this temperature until the contents had become homogeneous (1-2 h). After cooling to room temperature the reactor contents were transferred to a separatory funnel. To remove the p-methoxyphenol, the 3-0-methacryloyl-D-glucose solution was treated with 50 ml diethyl ether and after phase separation had occurred the organic phase was removed. This extraction procedure was repeated four times. Subsequently the aqueous solution was transferred to the above-mentioned 100 ml glass reactor and a pressure slightly below atmospheric was applied to remove the last traces of diethyl ether. Finally the solution was neutralized to a pH of 7 with 1.0 N NaOH, which procedure was carefully monitored by pH measurement. A solids determination indicated that the MG content of the aqueous solution was 8 %w (= 0.32 mol/l).

c) Determining the water solubility of miscellaneous peroxides at 20°C by means of an iodometric titration method

Approximately 100 mg of peroxide was weighed into a 200 ml brown flask, which had been evacuated with nitrogen for 5 minutes, whereupon 100 ml oxygen-free demineralized water was added. The peroxide was allowed to dissolve by placing the flask under a blanket of nitrogen in an ultrasonic bath. Subsequently the flask was stored in a thermostated bath at 20°C for 3 hours. After filtration over a 0.45 μm micropore filter in an inert atmosphere, a 40-60 ml sample of the filtrate was introduced into a 100 ml brown flask, which had been evacuated with nitrogen. After purging the solution with a nitrogen stream for about 10 minutes, 1 g powdered potassium iodide (p.a. grade) and 1 ml 37 %w hydrochloric acid were added. The contents of the flask were mixed intimately at 60°C in an inert atmosphere for 1 hour, and after cooling to room temperature, purged with a nitrogen stream for 5 minutes. Finally the solution was titrated potentiometrically with a 0.1N sodium thiosulfate solution, employing a combination of a platinum and a calomet electrode. Taking into account the results of the corresponding blank determinations which on average required 0.022 ml 0.1N sodium thiosulfate solution, the following solubility data were obtained:

| d) Free-radical initiator | Solubility in water at 20°C |
|---|---|
| Dimyristyl peroxydicarbonate | <50 μmol/kg |
| Bis(tert-butylcyclohexyl) peroxydicarbonate | <50 |
| Bis(2-methylbenzoyl) peroxide | <50 |
| Dicyclohexyl peroxydicarbonate | 50–75 |
| tert-Butyl peroxypivalate | 900 |

### Example I-IV

**Preparation of poly-MG at 35 and/or 40°C employing different non-azo type free-radical initiators in a MG/free-radical initiator molar ratio of 1000:1**

50 ml of an 8 %w MG solution, prepared following the method as described hereinbefore, was introduced into a 100 ml glass reactor as described hereinbefore and flushed with $N_2$ to remove any oxygen. Subsequently 250 μl acetone containing so much initiator was introduced into the reactor so as to arrive at a MG/initiator molar ratio of 1000:1. The reactor contents were heated with the aid of a thermostated oilbath to 35 or 40°C, and with moderate stirring and a slight $N_2$ purge maintained at that temperature for 40 hours. Upon termination of the polymerization reaction the reactor contents were cooled to room temperature and poured out under continuous stirring in approximately 150 ml ethyl alcohol whereupon the poly-MG was precipitated. After removing the liquid phase the residue was dried under sub-atmospheric pressure at 50°C to a constant weight. The ultimate products were white, water-soluble powders. The viscosities of the different aqueous solutions prepared from these poly-MG polymers are given in Table I.

### TABLE 1

| Example | Initiator | Viscosity of 1 %w aqueous solutions at 25°C and $\dot{\gamma}$ =7.4 $s^{-1}$ mPa.s | |
|---------|-----------|--------|--------|
| | | 35°C | 40°C |
| I | A | 58.5 | 42.2 |
| II | B | 17.9 | – |
| III | C | 16.5 | 12.0 |
| IV | D | 9.4 | – |

### Examples V-VIII

**Preparation of poly-MG at different temperatures employing 4-(tert-butyl)cyclohexyl peroxydicarbonate in a MG/initiator molar ratio of 1000:1 and 2000:1.**

50 ml of an 8 %w MG solution, prepared following the method as described hereinbefore, was introduced into a 100 ml glass reactor as described hereinbefore and flushed with $N_2$ to remove any oxygen. Subsequently 250 μl of a solution of E in acetone, containing so much free-radical initiator to arrive at a MG/initiator molar of 1000:1 or 2000:1 respectively. With the aid of a thermostated oilbath the reactor contents were heated to the temperature indicated in Table 2 and with moderate stirring and a slight $N_2$ purge maintained at this temperature for 40 hours. From hereon the procedure was identical to the one described in Examples I-IV. The viscosities of the aqueous solutions prepared from these MG polymers are given in Table 2.

## TABLE 2

| Example | Polymerization temperature °C | viscosity of 1 %w aqueous solutions at 25°C and $\tilde{\gamma} = 7.4$ s$^{-1}$ mPa.s | |
|---------|------------------------------|------------------|------------------|
| | | 1000:1 | 2000:1 |
| V | 35 | 28.9 | 28.9 |
| VI | 40 | 21.3 | 27.1 |
| VII | 50 | 16.3 | 22.5 |
| VIII | 65 | 14.4 | 21.3 |

Comparative Experiments A-D.

Preparation of poly MG at different polymerization temperatures employing APS and H$_2$O$_2$ respectively, at a MG/initiator molar ration of 1000:1.

These experiments were carried out according to the procedure described in Examples V-VIII and wherein the APS and H$_2$O$_2$ were added to the reactor contents as aqueous solutions containing 1 g initiator/l. The viscosities of the aqueous solutions prepared from these MG-polymers are given in Table 3.

## TABLE 3

| Comparative Experiments | Polymerisation temperature, °C | Viscosity of 1 %w aqueous solutions at 20°C and $\dot{\gamma} = 7,4$ s$^{-1}$ mPa.s | |
|-------------------------|-------------------------------|------|------|
| | | APS | H$_2$O$_2$ |
| A | 85 | 2.7 | 5.1 |
| B | 65 | 2.0 | 2.7 |
| C | 55 | 2.3 | 5.8 |
| D | 40 | 4.0 | – |

Example IX

Preparation of MG/MA copolymer

To an aqueous solution of MG prepared as described hereinbefore MA and water were added in such amounts so as to arrive at a solution having a MG/MA molar ratio of 77:23 and a monomer content of 8 %w. 50 ml of the thus obtained solution was introduced into a 100 ml glass reactor as described hereinbefore and flushed with N$_2$ to remove any oxygen. Subsequently 250 µl of an acetone solution of dimyristyl peroxydicarbonate containing so much dimyristyl peroxydicarbonate to arrive at a monomer/dimyristyl

6

peroxydicarbonate molar ratio of 1000:1 was introduced into the solution. With the aid of a thermostated oilbath the reactor contents were heated to 40°C with moderate stirring and a slight $N_2$ purge and maintained at this temperature for 42 hours. Upon termination of the polymerization the reactor contents were cooled to room temperature and poured out under continuous stirring in approximately 150 ml ethyl alcohol, whereupon the MG/MA copolymer was precipitated. After drying the MG/MA copolymer was dissolved in 250 ml water and the carboxylic acid groups where carefully neutralized employing an aqueous 1 N NaOH solution. Subsequently the resulting solutions were poured out in 200 ml ethyl alcohol and the obtained precipitate was dried under sub-atmospheric pressure at 50°C to constant weight. Aqueous solutions were prepared containing 0.1, 0.25 and 1.0 %w of the neutralized MG/MA copolymer respectively and the viscosity of the obtained solutions was determined together with that of the 0.25 %w solution to which so much NaCl had been added to arrive at a 3%w NaCl solution. The resulting viscosity data have been collected in Table 4.

## TABLE 4

| NaCl concentration %w | viscosity of aqueous solutions at 25°C and $\dot{\gamma}$ =7,4 $s^{-1}$ mPa.s | |
|---|---|---|
| | 0 | 3 |
| Copolymer concentration %w | | |
| 0.1 | 34.9 | – |
| 0.25 | 70.7 | 2.19 |
| 1.0 | 259 | – |

## Claims

1. A process for the preparation of water-soluble vinyl saccharide polymers by polymerization in water of at least one water-soluble monovinyl saccharide monomer at a temperature in the range of from 10°C to 90°C, wherein the polymerization is carried out in the presence of a non-azo type free-radical initiator, having a solubility in water at 20°C of not more than 2500 $\mu$ mol/kg and the concentration of water-soluble monovinyl saccharide monomer in water is not higher than 150 kg/m³ water.

2. A process as claimed in claim 1, wherein the non-azo type free-radical initiator has a solubility in water at 20°C of not more than 1500 $\mu$ mol/kg.

3. A process as claimed in claims 1 and 2, wherein the free-radical initiator is a diacyl peroxide, a peroxydicarbonate or a peroxyester.

4. A process as claimed in any one of the preceding claims, wherein the concentration of the water-soluble monovinyl saccharide monomer in water does not exceed 100 kg/m³.

5. A process as claimed in any one of the preceding claims , wherein the water-soluble monovinyl saccharide monomer is a vinylcarbonyloxy group-containing saccharide monomer.

6. A process as claimed in claim 5, wherein the vinyl-carbonyloxy group-containing saccharide monomer is a monomethacryloyl group-containing saccharide monomer.

7. A process as claimed in claim 6, wherein the monomethacryloyl group-containing saccharide monomer is 3-0-methacryloyl-D-glucose.

8. A process as claimed in any one of the preceding claims, wherein at least one water-soluble $\alpha,\beta$-olefinically unsaturated mono- or dicarboxylic acid is copolymerized.

9. A process as claimed in claim 8, wherein the water-soluble $\alpha,\beta$-olefinically unsaturated monocarboxylic acid is methacrylic acid.

10. A process as claimed in any one of the preceding claims, wherein the molar ratio of water-soluble monovinyl saccharide monomer to non-azo type free-radical initiator is at least 100:1.

11. A process as claimed in claim 10, wherein the molar ratio of water-soluble monovinyl saccharide monomer to non-azo type free-radical initiator is at least 500:1.

12. A process as claimed in any one of the preceding claims, wherein the polymerization is carried out at a temperature in the range of from 25°C to 75°C.

**Patentansprüche**

1. Verfahren zur Herstellung von wasserlöslichen Vinylsaccharid-Polymeren durch Polymerisation in Wasser von mindestens einem wasserlöslichen Monovinylsaccharid-Monomer bei einer Temperatur im Bereich von 10°C bis 90°C, wobei die Polymerisation durchgeführt wird in Gegenwart eines freie Radikale liefernden Initiators, der nicht vom Azotyp ist, mit einer Wasserlöslichkeit bei 20°C von nicht mehr als 2500 µmol/kg, und wobei die Konzentration des wasserlöslichen Monovinylsaccharid-Monomers in Wasser nicht höher liegt als 150 kg/m³ Wasser.

2. Verfahren nach Anspruch 1, wobei der freie Radikale liefernde Initiator, der nicht vom Azotyp ist, eine Löslichkeit in Wasser bei 20°C von nicht mehr als 1500 µmol/kg besitzt.

3. Verfahren nach Anspruch 1 oder 2, wobei der freie Radikale liefernde Initiator ein Diacylperoxid, ein Peroxydicarbonat oder ein Peroxyester ist.

4. Verfahren nach einem der vorangehenden Ansprüche, wobei die Konzentration an dem wasserlöslichen Monovinylsaccharid-Monomer in Wasser 100 kg/m³ nicht übersteigt.

5. Verfahren nach einem der vorangehenden Ansprüche, wobei das wasserlösliche Monovinylsaccharid-Monomer ein Vinylcarbonyloxygruppen-haltiges Saccharid-Monomer ist.

6. Verfahren nach Anspruch 5, wobei das Vinylcarbonyloxygruppen-haltige Saccharid-Monomer ein Monomethacryloylgruppen-haltiges Saccharid-Monomer ist.

7. Verfahren nach Anspruch 6, wobei das Monomethacryloylgruppen-haltige Saccharid-Monomer 3-0-Methacryloyl-D-glucose ist.

8. Verfahren nach einem der vorangehenden Ansprüche, wobei mindestens eine wasserlösliche, $\alpha$, $\beta$-olefinisch ungesättigte Mono- oder Dicarbonsäure copolymerisiert wird.

9. Verfahren nach Anspruch 8, wobei die wasserlösliche, $\alpha$, $\beta$-olefinisch ungesättigte Monocarbonsäure Methacrylsäure ist.

10. Verfahren nach einem der vorangehenden Ansprüche, wobei das Molverhältnis von wasserlöslichem Monovinylsaccharid-Monomer zu freie Radikale lieferndem Initiator, der nicht vom Azotyp ist, mindestens 100:1 beträgt.

11. Verfahren nach Anspruch 10, wobei das Molverhältnis von wasserlöslichem Monovinylsaccharid-Monomer zu freie Radikale lieferndem Initiator, der nicht vom Azotyp ist, zumindest 500:1 beträgt.

12. Verfahren nach einem der vorangehenden Ansprüche, wobei die Polymerisation bei einer Temperatur im Bereich von 25°C bis 75°C durchgeführt wird.

**Revendications**

1. Un procédé pour la préparation de polymères de vinyl-saccharides solubles dans l'eau par polymérisation dans l'eau d'au moins un monomère monovinyl saccharide à une température comprise entre 10°C et 90°C, où la polymérisation est conduite en présence d'un initiateur radicalaire de type non-azoïque, ayant une solubilité dans l'eau à 20°C de pas plus de 2500 µmoles/kg et où la concentration dans l'eau du monomère monovinyl saccharide soluble dans l'eau n'est pas supérieure à 150 kg/m³ d'eau.

2. Un procédé selon la revendication 1, dans lequel l'initiateur radicalaire de type non-azoïque a une solubilité dans l'eau à 30°C de pas plus de 1500 µmoles/kg.

3. Un procédé selon les revendications 1 et 2, dans lequel l'initiateur radicalaire est un peroxyde de diacyle, un peroxydicarbonate ou un peroxyester.

4. Un procédé selon l'une quelconque des revendications précédentes, dans lequel la concentration dans l'eau du monomère monovinyl saccharide soluble dans l'eau n'est pas supérieure à 100 kg/m³.

5. Un procédé selon l'une quelconque des revendications précédentes, dans lequel le monomère monovinyl saccharide soluble dans l'eau est un monomère d'un saccharide contenant un groupe vinylcarbonyloxy.

6. Un procédé selon la revendication 5, dans lequel le monomère saccharide contenant, un groupe vinylcarbonyloxy est un monomère saccharide contenant un groupe monométhacryloyle.

7. Un procédé selon la revendication 6, dans lequel le monomère saccharide contenant un groupe monométhacryloyle est le 3-0-méthacryloyl-D-glucose.

8. Un procédé selon l'une quelconque des revendications précédentes, dans lequel au moins un acide mono- ou dicarboxylique oléfiniquement insaturé en alpha, bêta soluble dans l'eau est copolymérisé.

9. Un procédé selon la revendication 8, dans lequel l'acide monocarboxylique oléfiniquement insaturé en alpha, bêta soluble dans l'eau est l'acide méthacrylique.

10. Un procédé selon l'une quelconque des revendications précédentes, dans lequel le rapport molaire du monomère monovinyl saccharide soluble dans l'eau à l'initiateur radicalaire de type non-azoïque est d'au moins 100:1.

11. Un procédé selon la revendication 10, dans lequel le rapport molaire du monomère monovinyl saccharide soluble dans l'eau à l'initiateur radicalaire de type non-azoïque est d'au moins 500:1.

12. Un procédé selon l'une quelconque des revendications précédentes, dans lequel la polymérisation est effectuée à une température comprise entre 25°C et 75°C.